# EUROPÄISCHE PATENTSCHRIFT

(11) **EP 2 214 934 B1**
(45) Veröffentlichungstag und Bekanntmachung des Hinweises auf die Patenterteilung: **25.05.2011**
(21) Anmeldenummer: 08854158.6
(22) Anmeldetag: 22.10.2008
(51) Int. Cl.: B60R 22/44, B60R 22/46

(54) **REVERSIBLER GURTSTRAFFER**
REVERSIBLE BELT TENSIONER
PRÉTENSIONNEUR DE CEINTURE RÉVERSIBLE

(30) Priorität: 27.11.2007 DE 102007057398
(43) Veröffentlichungstag der Anmeldung: 11.08.2010
(73) Patentinhaber: Autoliv Development AB, 447 83 Vårgårda (SE)
(72) Erfinder: LUCHT, Andreas, 25358 Horst (DE); MEYER, Thomas, 22457 Hamburg (DE); TUSCHER, Patrick, 24558 Henstedt-Ulzburg (DE)
(74) Vertreter: Müller Verweyen
(86) Internationale Anmeldenummer: PCT/EP2008/008914
(87) Internationale Veröffentlichungsnummer: WO 2009/068146

(56) Entgegenhaltungen:
- EP-A- 1 147 951
- EP-A- 1 157 904
- EP-A- 1 291 251
- WO-A-99/51469
- DE-A1- 19 957 814
- US-B1- 6 598 823

## Beschreibung

Die Erfindung betrifft einen reversiblen Gurtstraffer mit den Merkmalen des Oberbegriffes des Anspruchs 1.

Ein derartiger reversibel angetriebener Gurtstraffer ist zum Beispiel aus der DE 199 57 814 A1 bekannt. Bei der dort vorgeschlagenen Lösung ist der Elektromotor mit einer Leiterplatte versehen, auf der eine elektronische Ansteuerschaltung mit zu einer Baugruppe zusammengefassten Leistungs- und Halbleiterelementen vorgesehen sind. Die Ansteuerung des Elektromotors erfolgt über verschiedene Sensoren, zu deren Positionierung und Befestigung der Schrift keine Hinweise zu entnehmen sind.

Aufgabe der Erfindung ist es, einen reversiblen Gurtstraffer mit einem möglichst kompakten Aufbau und geringen Montagekosten zu schaffen.

Zur Lösung der Aufgabe wird erfindungsgemäß vorgeschlagen, eine Platine vorzusehen, auf der ein Sensor zur Sensierung der Drehbewegung der Gurtspule und ein Sensor zur Sensierung der Drehbewegung des Elektromotors angeordnet sind, und dass das Getriebegehäuse einen Steckplatz zur Fixierung der Platine aufweist. Damit kann der Gurtstraffer durch Fixierung nur einer Platine bereits mit allen zur Steuerung des Gurtstraffers erforderlichen Sensoren ausgestattet werden. Ferner ist es möglich ein und dasselbe Getriebegehäuse zu verwenden, auch wenn keine erfindungsgemäße Sensorik an dem Gurtstraffer vorgesehen sein soll. Ein weiterer Vorteil der Erfindung ist es, dass die Sensoren sich in einer festen Zuordnung zueinander befinden und somit die Gefahr des Vertauschens der Sensoren, oder des Vergessens einer der Sensoren reduziert ist. Die Orientierung der Platine an dem Gurtstraffer kann z.B. durch eine Codierung des Steckplatzes erfolgen, so dass die Platine nur in einer für diese vorbestimmten Stellung fixiert werden kann.

Es wird weiter vorgeschlagen, dass an der Gurtwelle eine Wickelfeder vorgesehen ist, und der Steckplatz zwischen der Wickelfeder und der Gurtwelle angeordnet ist. Damit ist der Vorteil verbunden, dass die Platine vor äußeren Einflüssen geschützt und verliersicher an dem Gurtstraffer fixiert ist.

Eine besonders einfache Halterung der Platine besteht in einer Clipsverbindung, so dass diese ohne besondere Werkzeuge an dem Gurtstraffer fixiert und bedarfsweise auch wieder gelöst werden kann.

Ferner wird vorgeschlagen, dass die Sensoren die Bewegung von Bauteilen sensieren, die mit der Gurtwelle und dem Elektromotor verbundenen sind, und die Bauteile auf unterschiedlichen Seiten der Platine angeordnet sind. Somit ist die Gefahr der gegenseitigen negativen Signalbeeinträchtigung der beiden signalgebenden Bauteile reduziert.

Eine weitere vorteilhafte Weiterbildung besteht darin, dass die Sensoren auf derselben Seite der Platine angeordnet sind und eine unterschiedliche Empfindlichkeit aufweisen. Damit kann die Platine bei deren Herstellung kostengünstig nur von einer Seite bestückt werden, wobei durch die unterschiedliche Empfindlichkeit es dennoch ermöglicht ist, dass die Sensoren in unterschiedliche Richtungen sensieren.

Eine besonders sichere Fixierung der Platine besteht darin, den Steckplatz in der Umrandung der Platine als dreiseitig geschlossenes, und an den flächigen Seiten von dem Getriebegehäuse, der Wickelfeder oder der Gurtwelle begrenztes und zu einer Seite offenes Einschubfach auszubilden. Damit ist die Platine ideal vor mechanischen Belastungen oder Schmutzeinflüssen geschützt.

Ferner wird vorgeschlagen, dass der Elektromotor und die Gurtwelle achsparallel und das Getriebegehäuse an den Stirnseiten der Gurtwelle und des Elektromotors angeordnet sind, und die Platine in zumindest teilweiser Überdeckung der Gurtwelle und/oder des Elektromotors und/oder des die beiden Teile verbindenden Getriebes angeordnet ist.

Die Drehbewegung des Elektromotors ist vorzugsweise über ein Übersetzungsgetriebe auf die Gurtwelle übertragbar, wobei das Bauteil für die Sensierung der Drehbewegung des Elektromotors einem schneller als der Elektromotor drehenden Teil zugeordnet ist. Dies besitzt den Vorteil, dass stellvertretend für die Drehbewegung des Elektromotors eine höhere Drehzahl sensiert wird, und somit die Anzahl der Signale je Zeiteinheit eines vorgegebenen Signalgebers ebenfalls wesentlich höher ist. Damit ist eine wesentlich genauere Sensierung der Drehbewegung des Elektromotors ermöglicht.

Ferner wird vorgeschlagen, dass die Sensierung der Drehbewegung der Gurtwelle durch Sensierung der Drehbewegung eines mit der Gurtwelle drehfest verbundenen Magnetrades erfolgt, und die Sensierung der Drehbewegung des Elektromotors durch Sensierung der Drehbewegung eines drehfest mit dem Elektromotor verbundenen Magnetrades erfolgt.

Die Magneträder sollten vorzugsweise um Achsen rotieren, die winklig zueinander stehen, so dass deren auf die Sensoren einwirkenden Signale einen individuellen Verlauf besitzen, durch welchen beide Signale voneinander unterschieden werden können.

Die Erfindung wird nachfolgend anhand eines bevorzugten Ausführungsbeispieles näher beschrieben, die Figuren zeigen im Einzelnen:
- Fig.1:: Reversibler Gurtstraffer
- Fig.2:: Reversibler Gurtstraffer in Sicht auf das Getriebe- gehäuse ohne Wickelfederkassette
- Fig.3:: Getriebegehäuse mit Elektromotor ohne Gurtwelle
- Fig.4:: Wickelfeder im Zustand "Gurt eingezogen"
- Fig.5:: Wickelfeder im Zustand "Gurt ausgezogen"

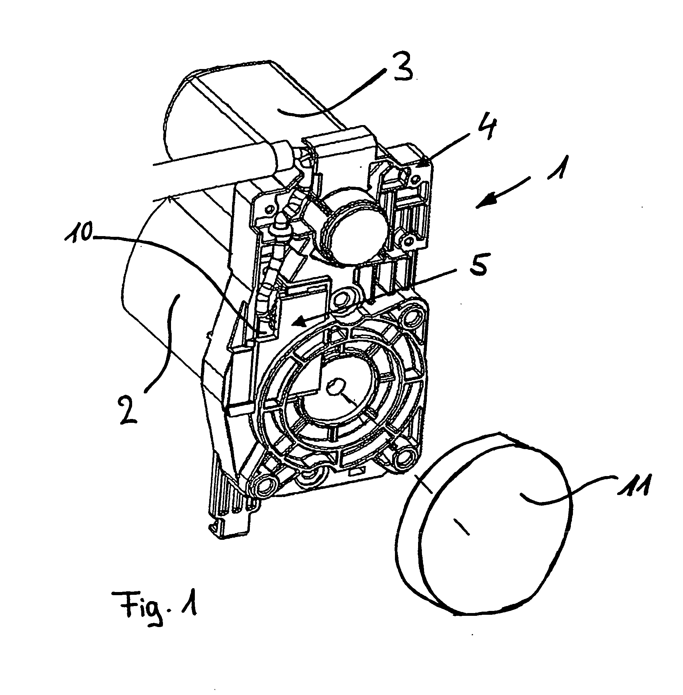

In der Fig.1 ist ein reversibler Gurtstraffer 1 mit einer Gurtwelle 2 und einem die Gurtwelle 2 antreibenden Elektromotor 3 zu erkennen. Der Elektromotor 3 ist über ein Getriebe, welches in einem Getriebegehäuse 4 angeordnet ist, mit der Gurtwelle 2 verbunden. Das Getriebegehäuse 4 weist einen Steckplatz 10 auf, in den eine Platine 5 eingesteckt ist. Das Einschubfach ist als seitlich geöffnetes Fach in dem Getriebegehäuse 4 zwischen einer von außen aufsteckbaren Federkassette 11 und einem später noch näher erläuterten Getriebe angeordnet. Das Fach ist in seiner äußeren Umrandung an die Geometrie der Platine angepasst, so dass diese möglichst ohne Spiel in dem Fach gehalten ist und nur in einer vorbestimmten Ausrichtung in dem Steckplatz 10 angeordnet werden kann. Ferner sind an dem Steckplatz Rastverbindungen vorgesehen, die die Platine gegen unbeabsichtigtes Lösen von dem Steckplatz sichern. Die Befestigung der Platine 5 kann aber auch alternativ oder zusätzlich durch Schrauben, Klebeverbindungen oder dergleichen gesichert sein.

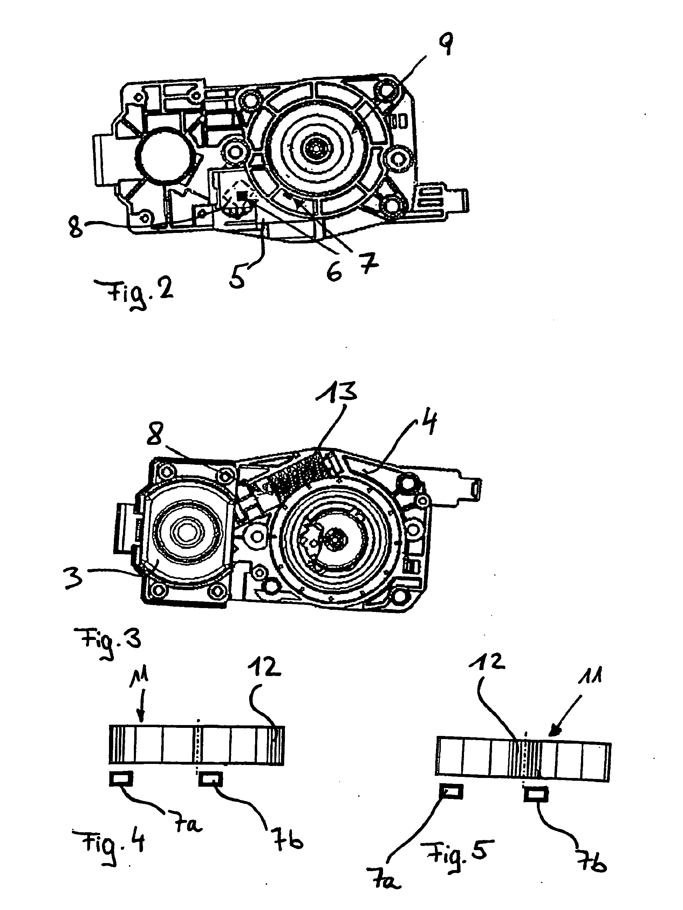

In Fig.2 ist die Platine 5 mit den Hallsensoren 6 und 7 zu erkennen. Der Hallsensor 7 ist einem mit der Gurtwelle 2 drehfest verbundenen Magnetrad 9 zugeordnet und sensiert durch das Erfassen der Drehbewegung des Magnetrades die Drehbewegung der Gurtwelle. In Fig.3 ist das Getriebegehäuse 4 aus Sicht der Gurtwelle 2 zu erkennen. Das Getriebe zwischen dem Elektromotor 3 und der nicht dargestellten Gurtwelle umfasst unter anderem eine Schnecke 13, deren Drehzahl aufgrund des Übersetzungsverhältnisses höher als die des Elektromotors 3 ist. An der Schnecke 13 ist eine Magnetrad 8 vorgesehen, welches zusammen mit der Schnecke 13 dreht. Die Drehbewegung des Magnetrades 8 wird von dem Hallsensor 6 sensiert und wird als Signal für die Drehbewegung des Elektromotors 3 verwendet. Aufgrund der Zuordnung des Magnetrades 8 zu der schneller drehenden Schnecke 13 wird bei Verwendung z.B. eines 2-poligen Magnetrades ein erheblich schneller wechselndes Signal erreicht als dies bei Zuordnung eines 2-poligen Magnetrades direkt zu dem Rotor des Elektromotors der Fall wäre.

Wie in Fig. 2 zu erkennen ist, sind das Magnetrad 8 und das Magnetrad 9 auf verschiedenen Seiten der Platine angeordnet, so dass sich die Signale geringst möglich stören. Die Hallsensoren 6 und 7 sind aus fertigungstechnischen Gründen auf derselben Seite der Platine 5 angeordnet, besitzen aber eine unterschiedliche Empfindlichkeit, damit sie in unterschiedliche Richtungen sensieren können und möglichst nicht durch das Signal des jeweiligen anderen Magnetrades gestört werden. Alternativ oder ergänzend zu der Sensierung der Drehbewegung der Gurtwelle 2 durch die Sensierung der Drehbewegung des Magnetrades 9 kann auch die Position der Wickelfeder 12, wie in Fig. 4 und 5 zu erkennen ist, sensiert werden. In dem Zustand "Gurt eingezogen" in Fig. 4 ist das Federpaket 12 entspannt und liegt an dem äußeren Radius der Federkassette 11 an. In diesem Zustand erzeugt der Hallsensor 7a ein Signal, durch welches auf den Zustand "Gurt eingezogen" geschlossen werden kann. In Fig. 5 in dem Zustand "Gurt ausgezogen" ist das Federpaket 12 gespannt und auf den inneren Radius der Federkassette 11 zusammengezogen. In diesem Zustand erzeugt der Hallsensor 7b ein Signal, durch welches auf den Zustand "Gurt ausgezogen" geschlossen werden kann. Für die Hallsensoren 7a und 7b zur Sensierung der Wickelfederposition hat sich der Typ "Allegro 3422" und für die Sensierung der Drehbewegung des Magnetrades 8 an der Schnecke 13 der Typ "Allegro 1210" als sinnvoll erwiesen. Zur Sensierung der Lage der Wickelfeder 12 haben sich linear vorgespannte Hallsensoren bewährt, welche durch die Änderung und Bewegung des aus Metall bestehenden Wickelfederpaketes ein Signal erzeugen. Durch diese sehr einfache Sensierung der Lage der Wickelfeder 12 kann ein sehr einfaches Signal für die Drehbewegung der Gurtwelle 2, in diesem Fall durch Sensieren der Zustände "Gurt eingezogen" und "Gurt ausgezogen" erzeugt werden.

Durch die Anordnung des Magnetrades 8 an der Schnecke 13 und die Sensierung der Drehbewegung des Magnetrades 9 an der Gurtwelle 2 und/oder der Position der Wickelfeder 12 wurden bewusst sich mit der Gurtwelle 2 und dem Elektromotor 3 drehende Teile gewählt, die möglichst dicht beieinander liegen, so dass die Platine 5 und deren Steckplatz 10 ebenfalls möglichst klein dimensioniert werden können. Ferner drehen die Magneträder 8 und 9 um winklig zueinander stehende Achsen, so dass deren Signale auch grundsätzlich anderen Verlauf haben. Die Sensoren können damit individuell auf das jeweilige Signal ausgelegt werden, so dass eine gegenseitige Beeinflussung der Signale ausgeschlossen werden kann.

Durch die vorgeschlagene Verwendung der Platine und des Steckplatzes an dem Getriebegehäuse wird allgemein ein Modulsystem geschaffen, durch welches es ermöglicht wird, dasselbe Getriebegehäuse je nach Anforderung des Kunden mit Sensoren zu bestücken oder nicht. Bei Änderung der Kundenanforderung muss lediglich die Platine geändert werden, das Getriebegehäuse selbst kann unverändert verwendet werden.

## Patentansprüche

1. Reversibler Gurtstraffer (1) mit folgenden Komponenten:
- einer Gurtwelle (2),
- einem die Gurtwelle (2) antreibenden Elektromotor (3),
- einem die Drehbewegung des Elektromotors (3) auf die Gurtwelle (2) übertragenden Getriebe,
- einem das Getriebe umfassende Getriebegehäuse (4), an dem sowohl die Gurtwelle (2) als auch der Elektromotor (3) gehaltert sind,
**dadurch gekennzeichnet, dass**
- eine Platine (5) vorgesehen ist, auf der ein Sensor (7,7a,7b) zur Sensierung der Drehbewegung der Gurtspule und ein Sensor (6) zur Sensierung der Drehbewegung des Elektromotors angeordnet sind,
- und das Getriebegehäuse (4) einen Steckplatz (10) zur Fixierung der Platine (5) aufweist.

2. Reversibler Gurtstraffer nach Anspruch 1, **dadurch gekennzeichnet, dass** an der Gurtwelle (2) eine Wickelfeder (12) vorgesehen ist, und der Steckplatz (10) zwischen der Wickelfeder (12) und der Gurtwelle (2) angeordnet ist.

3. Reversibler Gurtstraffer nach einem der vorangegangenen Ansprüche, **dadurch gekennzeichnet, dass** die Platine (5) in dem Steckplatz (10) durch eine Clipsverbindung verrastet ist.

4. Reversibler Gurtstraffer nach einem der vorangegangenen Ansprüche, **dadurch gekennzeichnet, dass** die Sensoren (6,7,7a,7b) die Bewegung von Bauteilen (8,9) sensieren, die mit der Gurtwelle (2) und dem Elektromotor (3) verbunden sind, und die Bauteile (8,9) auf unterschiedlichen Seiten der Platine (5) angeordnet sind.

5. Reversibler Gurtstraffer nach einem der vorangegangenen Ansprüche, **dadurch gekennzeichnet, dass** die Sensoren (6,7) auf derselben Seite der Platine (5) angeordnet sind und eine unterschiedliche Empfindlichkeit aufweisen.

6. Reversibler Gurtstraffer nach einem der vorangegangenen Ansprüche, **dadurch gekennzeichnet, dass** der Steckplatz (10) in der Umrandung der Platine als dreiseitig geschlossenes, und an den flächigen Seiten von dem Getriebegehäuse (4), der Wickelfeder (12) oder der Gurtwelle (2) begrenztes und zu einer Seite offenes Einschubfach ausgebildet ist.

7. Reversibler Gurtstraffer nach einem der vorangegangenen Ansprüche, **dadurch gekennzeichnet, dass** der Elektromotor (3) und die Gurtwelle (2) achsparallel und das Getriebegehäuse (4) an den Stirnseiten der Gurtwelle (2) und des Elektromotors (3) angeordnet ist, und die Platine (5) in zumindest teilweiser Überdeckung der Gurtwelle (2) und/oder des Elektromotors (3) und/oder des die beiden Teile verbindenden Getriebes angeordnet ist.

8. Reversibler Gurtstraffer nach einem der vorangegangenen Ansprüche, **dadurch gekennzeichnet, dass** die Drehbewegung des Elektromotors (3) über ein Übersetzungsgetriebe auf die Gurtwelle (2) übertragbar ist, und das Bauteil (8) für die Sensierung der Drehbewegung des Elektromotors (3) einem schneller als der Elektromotor (3) drehenden Teil (13) zugeordnet ist.

9. Reversibler Gurtstraffer nach einem der vorangegangenen Ansprüche, **dadurch gekennzeichnet, dass** die Sensierung der Drehbewegung der Gurtwelle (2) durch Sensierung der Drehbewegung eines mit der Gurtwelle (2) drehfest verbundenen Magnetrades (9) erfolgt.

10. Reversibler Gurtstraffer nach einem der vorangegangenen Ansprüche, **dadurch gekennzeichnet, dass** die Sensierung der Drehbewegung des Elektromotors (3) durch Sensierung der Drehbewegung eines drehfest mit dem Elektromotor (3) verbundenen Magnetrades (8) erfolgt.

11. Reversibler Gurtstraffer nach Anspruch 9 und 10, **dadurch gekennzeichnet, dass** die Magneträder (8,9) um Achsen rotieren, die winklig zueinander stehen.

## Claims

1. Reversible seat belt tensioner (1) comprising the following components:
- a belt shaft (2),
- an electric motor (3) driving the belt shaft (2),
- a gear transmitting the rotational movement of the electric motor (3) to the belt shaft (2),
- a gear housing (4) enclosing the gear, on which the belt shaft (2) as well as the electric motor (3) are mounted,
**characterized in that**
- a board (5) is provided, on which a sensor (7, 7a, 7b) for sensing the rotational movement of the belt reel and a sensor (6) for sensing the rotational movement of the electric motor are located,
- and that the gear housing (4) comprises a plug slot (10) for fixing the board (5).

2. Reversible seat belt tensioner according to claim 1, **characterized in that** on the belt shaft (2) a winding spring (12) is provided, and that the plug slot (10) is placed between the winding spring (12) and the belt shaft (2).

3. Reversible seat belt tensioner according to any one of the preceding claims, **characterized in that** the board (5) is engaged in the plug slot (10) via a clip connection.

4. Reversible seat belt tensioner according to any one of the preceding claims, **characterized in that** the sensors (6, 7, 7a, 7b) sense the movement of components (8, 9) which are connected with the belt shaft (2) and the electric motor (3), and that the components (8, 9) are located on different sides of the board (5).

5. Reversible seat belt tensioner according to any one of the preceding claims, **characterized in that** the sensors (6, 7) are located on the same side of the board (5) and have a different sensitivity.

6. Reversible seat belt tensioner according to any one of the preceding claims, **characterized in that** the plug slot (10) is formed in the border of the board as an insertion compartment which is closed on three sides and is limited on the planar sides by the gear housing (4), the winding spring (12) or the belt shaft (2) and is open on one side.

7. Reversible seat belt tensioner according to any one of the preceding claims, **characterized in that** the electric motor (3) and the belt shaft (2) are located to be axially parallel and the gear housing (4) is located on the front faces of the belt shaft (2) and of the electric motor (3), and that the board (5) is located in such a way that it at least partially covers the belt shaft (2) and/or the electric motor (3) and/or the gear connecting the two parts.

8. Reversible seat belt tensioner according to any one of the preceding claims, **characterized in that** the rotational movement of the electric motor (3) can be transmitted to the belt shaft (2) via a step-up gear, and that the component (8) for sensing the rotational movement of the electric motor (3) is allocated to a part (13) which rotates faster than the electric motor (3).

9. Reversible seat belt tensioner according to any one of the preceding claims, **characterized in that** the sensing of the rotational movement of the belt shaft (2) is performed by sensing the rotational movement of a magnetic wheel (9) which is connected with the belt shaft (2) in a rotationally fixed manner.

10. Reversible seat belt tensioner according to any one of the preceding claims, **characterized in that** the sensing of the rotational movement of the electric motor (3) is performed by sensing the rotational movement of a magnetic wheel (8) which is connected with the electric motor (3) in a rotationally fixed manner.

11. Reversible seat belt tensioner according to claim 9 and 10, **characterized in that** the magnetic wheels (8, 9) rotate around axes which are arranged at an angle to each other.

## Revendications

1. Prétensionneur de ceinture (1) réversible comprenant les éléments suivants:
- un axe d'enroulement (2),
- un moteur électrique (3) entraînant l'axe d'enroulement (2),
- un mécanisme de transmission qui transmet le mouvement de rotation du moteur électrique (3) à l'axe d'enroulement (2),
- ainsi qu'un carter de transmission (4) qui contient ce mécanisme de transmission et
sur lequel sont montés l'axe d'enroulement (2) et le moteur électrique (3) **caractérisé par le fait**
- **qu'**une platine (5) est prévue, sur laquelle sont disposés un capteur (7, 7a, 7b) destiné à détecter le mouvement de rotation de la bobine de ceinture et un capteur (6) destiné à détecter le mouvement de rotation du moteur électrique,
- et **que** le carter de transmission (4) présente un emplacement (10) destiné à la fixation de la platine (5).

2. Prétensionneur de ceinture réversible selon la revendication 1, **caractérisé par le fait qu'**un ressort spiral (12) est prévu sur l'axe d'enroulement (2), et l'emplacement (10) est disposé entre le ressort spiral (12) et l'axe d'enroulement (2).

3. Prétensionneur de ceinture réversible selon une des revendications précédentes, **caractérisé par le fait que** la platine (5) est encliquetée dans l'emplacement (10) par liaison clipsée.

4. Prétensionneur de ceinture réversible selon une des revendications précédentes, **caractérisé par le fait que** les capteurs (6, 7, 7a, 7b) détectent le mouvement d'éléments (8, 9), qui sont reliés à l'axe d'enroulement (2) et au moteur électrique (3), et les éléments (8, 9) sont disposés sur différents côtés de la platine (5).

5. Prétensionneur de ceinture réversible selon une des revendications précédentes, **caractérisé par le fait que** les capteurs (6, 7) sont disposés sur le même côté de la platine (5) et présentent une sensibilité différente.

6. Prétensionneur de ceinture réversible selon une des revendications précédentes, **caractérisé par le fait que** l'emplacement (10) est formé à la bordure de la platine en tant que compartiment d'insertion fermé sur trois côtés et limité, au niveau des côtés plans, par le carter de transmission (4), le ressort spiral (12) ou l'axe d'enroulement (2) et ouvert sur un côté.

7. Prétensionneur de ceinture réversible selon une des revendications précédentes, **caractérisé par le fait que** le moteur électrique (3) et l'axe d'enroulement (2) sont disposés parallèlement à l'axe et le carter de transmission (4) est disposé au niveau des côtés frontaux de l'axe d'enroulement (2) et du moteur électrique (3), et la platine (5) est disposée dans un recouvrement au moins partiel de l'axe d'enroulement (2) et/ou du moteur électrique (3) et/ou du mécanisme de transmission reliant les deux éléments.

8. Prétensionneur de ceinture réversible selon une des revendications précédentes, **caractérisé par le fait que** le mouvement de rotation du moteur électrique (3) peut être transmis par un mécanisme multiplicateur à l'axe d'enroulement (2), et l'élément (8) pour la détection du mouvement de rotation du moteur électrique (3) est attribué à un élément rotatif (13) plus rapide que le moteur électrique (3).

9. Prétensionneur de ceinture réversible selon une des revendications précédentes, **caractérisé par le fait que** la détection du mouvement de rotation de l'axe d'enroulement (2) s'effectue par détection du mouvement de rotation d'une roue magnétique (9) reliée solidaire en rotation à l'axe d'enroulement (2).

10. Prétensionneur de ceinture réversible selon une des revendications précédentes, **caractérisé par le fait que** la détection du mouvement de rotation du moteur électrique (3) s'effectue par détection du mouvement de rotation d'une roue magnétique (8) reliée solidaire en rotation au moteur électrique (3).

11. Prétensionneur de ceinture réversible selon les revendications 9 et 10, **caractérisé par le fait que** les roues magnétiques (8, 9) tournent autour d'axes qui forment un angle l'un par rapport à l'autre.
